# EUROPÄISCHE PATENTSCHRIFT

(11) **EP 3 218 239 B1**
(45) Veröffentlichungstag und Bekanntmachung des Hinweises auf die Patenterteilung: **05.08.2020**
(21) Anmeldenummer: 15790032.5
(22) Anmeldetag: 29.10.2015
(51) Int. Cl.: B60T 13/68, F16K 31/06, F16K 31/42, B60T 8/36

(54) **VENTILEINRICHTUNG FÜR EINE DRUCKLUFTANLAGE, DRUCKREGELMODUL MIT EINER DERARTIGEN VENTILEINRICHTUNG SOWIE KRAFTFAHRZEUG DAMIT**
VALVE DEVICE FOR A COMPRESSED-AIR SYSTEM, PRESSURE CONTROL MODULE HAVING SUCH A VALVE DEVICE, AND MOTOR VEHICLE EQUIPPED THEREWITH
SOUPAPE DESTINÉE À UN SYSTÈME D'AIR COMPRIMÉ, MODULE DE RÉGULATION DE PRESSION MUNI DE LADITE SOUPAPE AINSI QUE VÉHICULE AUTOMOBILE

(30) Priorität: 13.11.2014 DE 102014016771
(43) Veröffentlichungstag der Anmeldung: 20.09.2017
(73) Patentinhaber: WABCO GmbH, 30453 Hannover (DE)
(72) Erfinder: BEIER, Peter, 31515 Wunstorf (DE); OESER, Christian, 30179 Hannover (DE); SCHAPPLER, Hartmut, 30455 Hannover (DE)
(74) Vertreter: Lauerwald, Jörg
(86) Internationale Anmeldenummer: PCT/EP2015/002152
(87) Internationale Veröffentlichungsnummer: WO 2016/074764

(56) Entgegenhaltungen:
- EP-A1- 0 540 852
- WO-A1-02/087949
- WO-A1-03/031855
- DE-A1-102008 007 524
- FR-A1- 2 375 532
- FR-A1- 2 705 741
- GB-A- 2 110 795
- US-A1- 2006 192 425
- US-A1- 2009 302 250
- US-A1- 2013 134 339

## Beschreibung

Die Erfindung betrifft eine Ventileinrichtung für eine Druckluftanlage, ein Druckregelmodul mit der Ventileinrichtung sowie ein Kraftfahrzeug mit dem Druckregelmodul und/oder mit der Ventileinrichtung.

Druckluftanlagen in Kraftfahrzeugen, insbesondere Nutzfahrzeug, werden z.B. für Systeme wie das elektronische Bremssystem (EBS) eingesetzt. Hierbei werden die Drücke der Druckluftanlage mittels einer elektronischen Regelung beeinflusst. Der Bremswunsch eines Fahrers wird dazu bei Betätigung des Bremspedals als elektrisches Signal einer Steuerelektronik übergeben, welche mit einer Ventileinrichtung kommuniziert, die den Bremsdruck in den Bremszylindern entsprechend dem Bremswunsch des Fahrers einstellt. Dabei müssen diese Ventileinrichtungen bestimmte Anforderungen an die Nennweite und die Steuer-Durchflusskennlinie, z.B. für ein schnelles Anti-Blockier-System (ABS) oder Antriebs-Schlupf Regelung (ASR), erfüllen, welche einfache, übliche Proportionalventile für Druckluftanlagen jedoch nicht liefern können.

Herkömmlicherweise werden von der Steuerelektronik Magnetventile elektrisch angesteuert, welche wiederum eine pneumatische Steuerung für mindestens ein luftmengenverstärkendes Ventil, z.B. Relaisventil, bereitstellen. Die verhältnismäßig kleinen Druckluftmengen der Magnetventile steuern somit verhältnismäßig große Druckluftmengen z.B. für die Bremszylinder des Kraftfahrzeugs. Ein derartiges Relaisventil ist beispielsweise aus EP 1 844 999 A1 bekannt.

Derartige Ventileinrichtungen mit mindestens einem luftmengenverstärkenden Ventil weisen eine elektropneumatisch arbeitende Vorsteuereinrichtung auf, um den Bremszylindern den gewünschten Arbeitsdruck zur Verfügung zu stellen. DE 100 62 625 A1 zeigt beispielsweise eine elektropneumatisch arbeitende Vorsteuereinheit für ein elektronisches Bremssystem mit mehreren Magnetventilen, welche das luftmengenverstärkende Ventil pneumatisch ansteuern. Eine derartige Ventileinrichtung mit Vorsteuereinrichtung benötigt jedoch einen relativ großen Bauraum, um alle Komponenten anzuordnen.

Ferner werden aufgrund von Schaltvorgängen oder Ummagnetisierungsenergien in den Magnetventilen unerwünschte Körperschalleffekte und/oder Geräusche in den Druckluftvorratsbehältern erzeugt.

DE 10 2008 007 524 A1 zeigt eine Ventileinrichtung gemäß dem Oberbegriff von Anspruch 1, bei der der Ventilkolben eine große Wirkfläche aufweist, die dem im Bremsdruckraum herrschenden schwankenden Druck ausgesetzt ist, gegen den der Ventilkolben und damit das System aus Magnetanker und Magnetspule anarbeiten muss. Je höher der Bremsdruck ist, desto höher ist die Kraft, die das System aus Magnetanker und Magnetspule aufbringen muss, und desto höher ist damit der die Magnetspule durchfließende elektrische Strom. Daher ist dieses System in einem hohen Maße nichtlinear, so dass die Einstellung des Stroms durch die Magnetspule herausfordernd ist. Zudem steigt die benötigte Antriebsenergie für den Ventilkolben mit steigendem Strom an.

Entsprechendes gilt für den Belüftungskolben, dessen Wirkflächen ebenfalls erheblich schwankenden Drücken ausgesetzt sind: So wirkt auf die nach oben gerichtete Wirkfläche des Belüftungskolbens entweder nur der Atmosphärendruck oder der eingestellte Bremsdruck oder der Vorratsdruck. Auf der gegenüberliegenden Wirkfläche wirkt hingegen konstant der Vorratsdruck, so dass aufgrund der unterschiedlichen Druckverhältnisse eine ebenfalls erheblich schwankende resultierende Kraft folgt. Als Folge hiervon ist die Gegenkraft, mit der der Belüftungskolben auf den Ventilkolben wirkt - wenn die Magnetspule einen Bremsdruck auszusteuern versucht -, erheblichen Schwankungen unterworfen.

US 2009/0302250 A1 zeigt ebenfalls eine Ventileinrichtung, bei der ein Belüftungskolben eine Wirkfläche aufweist, die erheblich schwankenden Drücken ausgesetzt ist, so dass dieser Belüftungskolben unter Zwischenschaltung eines Polstücks mit erheblich schwankenden Gegenkräften auf einen Ventilkolben einwirkt. Zudem weist der Ventilkolben Wirkflächen auf, die ebenfalls substantiell schwankenden Drücken ausgesetzt sind. Daher ist auch dieses System in einem hohen Maße nichtlinear, so dass auch bei diesem System die Einstellung des Stroms durch die Magnetspule problematisch ist.

Weitere Ventileinrichtungen sind aus FR 2 705 741 A1 und EP 0 540 852 A1 bekannt.

Der Erfindung liegt nach alledem die Aufgabe zugrunde, eine Ventileinrichtung für eine Druckluftanlage bereitzustellen, die geräuscharm arbeitet, mit geringen Abmessungen herstellbar ist und nur geringe Antriebsenergie benötigt.

Die Erfindung löst diese Aufgabe mit einer Ventileinrichtung nach Anspruch 1, einem Druckregelmodul nach Anspruch 13, einem Kraftfahrzeug nach Anspruch 14 sowie einer Verwendung einer Ventileinrichtung nach Anspruch 15.

Die erfindungsgemäße Ventileinrichtung ist für eine Druckluftanlage, insbesondere eine Druckluftbremsanlage in Lastkraftwagen, geeignet und weist einen mit einer Druckmittelquelle verbindbaren Druckmitteleingang, wenigstens einen mit einem Verbraucher verbindbaren Druckmittelausgang und wenigstens eine zur Atmosphäre führende Entlüftung auf. Die Ventileinrichtung kann als Hauptventil, z.B. zum Ansteuern von Bremszylindern, eingesetzt werden und arbeitet als ein Dreipunkt-Ventil mit einer Dreipunkt-Regelfunktion. Bevorzugt ist die Ventileinrichtung als ein Doppelsitzventil mit einem Einlassventilsitz und einem Auslassventilsitz ausgeführt.

Die erfindungsgemäße Ventileinrichtung weist in einem Gehäuse einen Ventilkolben auf, welcher entlang einer Ventilkolbenachse verschiebbar angeordnet ist und zum Öffnen und Schließen eines Einlassventils einen zum Ventilkolben separat angeordneten Belüftungskolben bewegt.

Der Belüftungskolben der erfindungsgemäßen Ventileinrichtung weist eine Vorspanneinrichtung auf, z.B. eine Rückstellfeder, welche die für eine Rückstellung des Belüftungskolbens nötigen Kräfte aufbringt. Es ist jedoch auch möglich, eine pneumatische Vorspanneinrichtung, z.B. über die anliegende Druckmittelquelle zur Rückstellung des Belüftungskolbens zu realisieren.

Das Einlassventil der Ventileinrichtung wird geöffnet, indem der Ventilkolben den Belüftungskolben gegen die Kraft der Vorspanneinrichtung bewegt. Abhängig von der Bewegung des Ventilkolbens strömt Druckmittel einer Druckmittelquelle über den Druckmitteleingang in die Ventileinrichtung, um über den Druckmittelausgang einen Verbraucher, z.B. einen Bremszylinder, mit einem vorbestimmten Arbeitsdruck bzw. Bremsdruck zu versorgen.

Zum Schließen des Einlassventils der Ventileinrichtung wird der Ventilkolben vom Belüftungskolben abgehoben und der Belüftungskolben aufgrund der Vorspanneinrichtung zurückbewegt.

Die erfindungsgemäße Ventileinrichtung zeichnet sich durch einen elektromechanischen Linearantrieb aus, welcher den Ventilkolben zum Steuern von am Druckmittelausgang herrschenden Drücken, insbesondere Bremsdrücken eines Bremssystems, in Abhängigkeit eines dem Linearantrieb zugeführten elektrischen Steuersignals linear antreibt.

Unter einem elektromechanischen Linearantrieb wird ein Antriebssystem verstanden, welches bevorzugt ein elektrisches Stellorgan aufweist, welches mechanisch auf den Ventilkoben wirkt und diesen, insbesondere direkt, antreibt. Der Linearantrieb regt den Ventilkolben somit zu einer translatorischen Bewegung an, bei der der Ventilkolben in einer geraden Linie entlang der Ventilkolbenachse bewegt wird. Die Bewegung des Ventilkolbens durch den Linearantrieb erfolgt derart, dass das Einstellen eines gewünschten Arbeitsdrucks am Druckmittelausgang annähernd stufenlos erfolgt. Bevorzugt sind jedwede elektromechanische Linearantriebe in der erfindungsgemäßen Ventileinrichtung einsetzbar, die durch die Ansteuerung mit einem elektrischen Steuersignal dieses in eine Wegänderung für den Ventilkolben umformen.

Erfindungsgemäß ist die Ventileinrichtung druckausgeglichen aufgebaut. Dazu sind entsprechende Durchgangsöffnungen in dem Ventilkolben und dem Belüftungskolben vorgesehen, die eine Druckentlastung der Stellglieder bewirken. Ein druckausgeglichener Aufbau der Ventileinrichtung hat den Vorteil, dass die benötigte Antriebsenergie minimiert werden kann.

Die Steuerung von Einlass- und Auslassventil des Doppelsitzventils erfolgt über eine direkte Bewegungssteuerung am Ventilkolben, wobei die Bewegungssteuerung durch einen Linearantrieb in Abhängigkeit eines an einem elektrischen Anschluss der Ventileinrichtung anliegendem elektrischen Steuersignal erfolgt. Es findet erfindungsgemäß eine Steuerung des Arbeitsdrucks über den elektrischen Anschluss statt. Durch die direkte Bewegungssteuerung am Ventilkolben ist vorteilhafterweise keine pneumatische Steuerleitung zur Ventileinrichtung hin notwendig. Die Verwendung eines elektromechanischen Linearantriebs hat daher gegenüber dem herkömmlichen elektropneumatischen Antrieb den Vorteil, dass auf entsprechende pneumatische Komponenten verzichtet werden kann, wodurch die erfindungsgemäße Ventileinrichtung energieeffizienter und langlebiger zu realisieren ist.

Ferner weist die Ventileinrichtung mit dem elektromechanischen Linearantrieb eine geringere Wärmeentwicklung im Vergleich zu herkömmlichen Magnetventilen als Vorsteuereinrichtung auf.

Ferner lässt sich der herkömmlich benötigte Bauraum für ein luftmengenverstärkendes Ventil mit zugehöriger Vorsteuereinheit vorteilhafterweise reduzieren, indem auf eine herkömmliche Vorsteuereinheit verzichtet werden kann, da der Ventilkolben mittels des Linearantriebs direkt bewegt wird. Trotz Bauraumreduzierung weist die erfindungsgemäße Ventileinrichtung vorteilhafterweise ein großes Durchflussvermögen durch große Querschnittsöffnungen in dem Einlass- und Auslassventil auf.

Gemäß einer Weiterbildung der Erfindung ist der elektromechanische Linearantrieb als ein Linearmagnetsystem ausgebildet. Dazu weist die Ventileinrichtung einen Elektromagneten auf, der wiederum mindestens einen Spulenkörper und einen verstellbaren Anker aufweist. An dem Anker ist der Ventilkolben befestigt oder der Anker ist mit dem Ventilkolben verbunden, so dass der Ventilkolben durch ein elektrisch erregtes Magnetfeld des Elektromagnets linearer bewegt werden kann.

Die Rückstellung des Ankers bzw. des Ventilkolbens erfolgt durch eine Vorspanneinrichtung, wie z.B. eine Rückstellfeder. Durch den Elektromagneten wird daher eine Kraft aufgebracht, welche in der Lage ist, den Anker mitsamt Ventilkolben gegen die Kraft der Vorspanneinrichtung anzuziehen bzw. mechanisch zu verstellen. Durch die Verwendung eines Linearmagnetsystems ist vorteilhafterweise eine direkte Umsetzung der translatorischen Ventilkolbenbewegung möglich.

Gemäß einer alternativen Weiterbildung der Erfindung ist der elektromechanische Linearantrieb als ein Linearsteller ausgebildet. Ein Linearsteller ist derart ausgestaltet, um unter Kraftbeaufschlagung ein elektrisches Steuersignal in eine mechanische Linearstellung des Ventilkolbens umzusetzen.

Beispielsweise kann unter einem Linearsteller ein Spindelantrieb bzw. eine Einrichtung aus einem Verstellmotor und einem Schraubgetriebe bzw. Spindelgetriebe mit einer Schraube bzw. Spindel verstanden werden. Dabei wird die Schraube direkt von der Motorwelle angetrieben, so dass die Rotationsbewegung des Verstellmotors in eine Linearbewegung des Ventilkolbens umgesetzt wird.

Um eine Rückstellung des Ventilkolbens zu ermöglichen, ist ein reversibler Motorbetrieb notwendig. Alternativ können die Motorwelle und Schraube bzw. Spindel entgegen der aktiven Drehrichtung des Motors durch ein elastisches Federelement, z.B. eine Spiralfeder, vorgespannt sein, um entsprechende Rückstellkräfte aufzubringen.

Die Verwendung eines Linearstellers als elektromechanischen Linearantrieb des Ventilkolbens der erfindungsgemäßen Ventileinrichtung ermöglicht vorteilhafterweise hohe Stellkräfte und einen variablen Hub des Ventilkolbens, so dass der am Druckmittelausgang anliegende Arbeitsdruck kontinuierlich einstellbar ist.

Gemäß einer alternativen Weiterbildung der Erfindung ist der elektromechanische Linearantrieb als ein Linearmotor, insbesondere ein zylindrischer Linearmotor bzw. ein Solenoidmotor, ausgebildet.

Der Linearmotor ist eine elektrische Antriebsmaschine, welche eine definierte elektromagnetische Kraft, insbesondere Schubkraft, erzeugt, welche eine lineare Bewegung ohne ein Getriebe direkt hervorruft. Dazu weist der Linearmotor einen zylindrischen ersten Antriebsteil und einen zylindrisch ausgebildeten zweiten Antriebsteil auf, wobei sich beide Antriebsteile relativ zueinander bewegen können. Dabei sind die beiden Antriebsteile weder über Schleifkontakte, noch über Kabel miteinander verbunden. Die lineare Bewegung des Linearmotors wird direkt mittels elektromagnetischer Kräfte erzeugt. Dadurch ist ein derartiger Linearmotor vorteilhafterweise in der Lage ohne zusätzliche mechanische Komponenten hoch dynamische Bewegungen auszuführen. Durch die berührungslose Kraftübertragung sind Linearmotoren vorteilhafterweise nahezu verschleißlos.

Der zylindrische Linearmotor ist bevorzugt symmetrisch aufgebaut und weist einen Primärteil auf, indem ein zweiphasiges oder dreiphasiges Wicklungssystem untergebracht ist und einen Sekundärteil, welcher Permanentmagnete mit abwechselnder Magnetisierungsrichtung mit einer Nord-Süd-Nord-Süd-Feldanordnung aufweist. Statt der Permanentmagnete kann der Sekundärteil jedoch auch mit entsprechenden gegenpoligen Erregerwicklungen ausgeführt werden.

Fließt in dem Wicklungssystem des Primärteils ein elektrischer Strom, erzeugt dieses ein Wandermagnetfeld, welches die Permanentmagnete bzw. Erregerwicklungen des Sekundärteils durchsetzen. Durch die Überlagerung der magnetischen Flüsse resultiert eine Kraft, wodurch sich Primärteil und Sekundärteil des Linearmotors relativ zueinander bewegen.

Der Linearmotor arbeitet nahezu verschleißfrei und geräuscharm und sorgt vorteilhafterweise in der Ventileinrichtung für eine hohe Dynamik bei der Druckregelung und für sehr gute Regeleigenschaften.

Eine Weiterbildung der Erfindung sieht vor, dass die Ventileinrichtung eine pneumatische Nennweite von mindestens 8 mm aufweist. Dabei entspricht die Nennweite annähernd dem kleinsten Querschnitt im Hauptstrom des Ventils. Ein großes Durchflussvermögen lässt sich z.B. durch große Querschnittsöffnungen bei der Verwendung eines Plattenventils erzielen.

Eine Nennweite von mindestens 8 mm ermöglicht vorteilhafterweise das Einsetzen der erfindungsgemäßen Ventileinrichtung auch an der Vorderachse des Kraftfahrzeugs sowie mit zwei Bremszylinder-Aktoren.

In einer Weiterbildung der Erfindung weist die Ventileinrichtung mindestens einen mechanischen Energiespeicher auf, insbesondere eine Rückholfeder, welche derart ausgebildet ist, um den Ventilkolben in eine Position zu bewegen, in der die Ventileinrichtung entlüftet ist. Dadurch lässt sich besonders einfach ein "Fail Safe"-Zustand, z.B. bei einem spontanen Ausfall der Steuerelektronik, herstellen, bei dem die an die Ventileinrichtung angeschlossenen Bremszylinder vollständig drucklos sind.

Ferner darf im ungebremsten Zustand kein Restdruck an den angeschlossenen Bremszylindern anliegen, weil es sonst zu so genannten "Heißläufern" kommen kann. Die Rückholfeder der Ventileinrichtung sorgt vorteilhafterweise für eine zuverlässige Entlüftung der Ventileinrichtung, indem der Ventilkolben stets ganz in seine Entlüftungsposition gebracht wird, wenn das elektrische Steuersignal dies vorgibt bzw. wenn kein elektrisches Signal anliegt, z.B. bei einem Ausfall der Steuerelektronik.

Bevorzugt ist die Rückholfeder einerseits fest mit dem Gehäuse verbunden und andererseits mit dem Ventilkolben. Bei einer Bewegung des Ventilkolbens entgegen der Federkraft wird diese gespannt und wirkt als mechanischer Energiespeicher. Bei einem Ausfall der Elektrik wird somit der Sicherheitszustand erreicht, indem die gespeicherte mechanische Energie in eine Bewegung des Ventilkolbens umgewandelt wird.

Ferner hat eine derartige Rückholfeder einen positiven Einfluss auf eine vorhandene Hysterese der Ventileinrichtung.

Gemäß einer Weiterbildung der Erfindung weist die Ventileinrichtung ein oder mehrere Gleitelemente auf, welche zwischen einer Ventilkolbenführung und dem

Ventilkolben angeordnet sind. Dabei sind diese Gleitelemente bevorzugt derart ausgestaltet, um die Gleitfähigkeit des Ventilkolbens zu erhöhen, da aufgrund der genauen Führung des Ventilkolbens durch das Gleitelement bzw. die Gleitelemente vorteilhafterweise ein sehr niedriger Reibwert entsteht.

In einer Weiterbildung der Erfindung weist die Ventileinrichtung mindestens ein Anschlagelement auf, welches derart ausgestaltet ist, um den Aufprall des Ventilkolbens zu dämpfen. Dazu ist das Anschlagelement elastisch ausgeführt und bevorzugt oberhalb der Entlüftungsposition des Ventilkolbens befestigt, z.B. am Gehäuse. Ein derartiger elastischer Anschlag nimmt vorteilhafterweise einen Großteil der Bewegungsenergie des Ventilkolbens auf und sorgt somit vorteilhafterweise für eine längere Haltbarkeit der Ventileinrichtung sowie für eine geräuscharme Bewegung des Ventilkolbens.

Gemäß einer Weiterbildung der Erfindung weist die Ventileinrichtung mindestens zwei dynamische Dichtungen auf, welche derart ausgestaltet sind, um den Ventilkolben gegen das Gehäuse abzudichten. Eine dynamische Dichtung zeichnet sich darin aus, dass sich die Dichtelemente relativ zueinander bewegen. Da es sich bei der Bewegung des Ventilkolbens um eine translatorische Bewegung handelt, werden als Dichtelemente bevorzugt translatorische Dichtungen verwendet, um den Ventilkolben zum Gehäuse bzw. zur Ventilkolbenführung hin abzudichten.

Bei der Verwendung von Berührungsdichtungen als dynamische Dichtungen muss beachtet werden, dass die Anpresskraft der Dichtelemente mindestens so groß ist, wie der Druck des abzudichtenden Mediums, insbesondere der anliegenden Druckluft.

In einer Weiterbildung der Erfindung ist das elektrische Steuersignal mit einem Dithersignal überlagert, um Hystereseeffekte des elektromechanischen Linearantriebs und des Dreipunkt-Ventils zu minimieren. Dazu erzeugt das Dithersignal rasche, kleine Änderungen der Stromstärke, die den Ventilkolben in Bewegung halten.

Die Dynamikanforderung vor allem im Kleinsignalbereich erfordert eine hohe Stellauflösung der Nennweite der erfindungsgemäßen Ventileinrichtung. Da sich dabei im Regelkreis die Hysterese der Ventileinrichtung störend bemerkbar machen kann, werden derartige Hystereseeffekte minimiert.

Die Hysterese kann mittels des Dithersignals verringert werden, indem der Ventilkolben ständig mit einer sehr kleinen Amplitude in Bewegung gehalten wird. Dadurch wird vorteilhafterweise ein Anhaften des Ventilkolbens verhindert und die Haftreibung reduziert und somit die Hysterese reduziert. Ohne die Mikrobewegungen des Ventilkolbens müsste eine erhöhte Kraft aufgebracht werden, um die Haftreibung zu überwinden und den Ventilkolben aus der Ruheposition heraus zu bewegen. Die Haftreibungskraft sorgt nachteilig dafür, dass sich der Ventilkolben ruckartig in Bewegung setzt. Wird der Ventilkolben jedoch in Bewegung gehalten, liegt lediglich Gleitreibung am Ventilkolben vor, die der Bewegungsrichtung des Ventilkolbens entgegen wirkt.

Auf das elektrische Steuersignal, welches an dem elektromechanischen Linearantrieb anliegt, wird ein zusätzliches Signal, das Dithersignal, aufaddiert. Dabei ist das Dithersignal in der Amplitude möglichst klein, so dass keine Verschleißerscheinungen an der Ventileinrichtung durch das Dithersignal auftreten aber die beweglichen mechanischen Teile der Ventileinrichtung dennoch in Bewegung gehalten werden, um ein präzises hysteresearmes Kleinsignalverhalten der Ventileinrichtung zu erhalten. Es lassen sich aufgrund dieser schwingenden Mikrobewegungen auch kleine Druckänderungen am Druckmittelausgang vornehmen.

Gemäß einer Weiterbildung der Erfindung sind Arbeitspunkte der Ventileinrichtung, insbesondere der Arbeitpunkt des Einlassventils und der Arbeitspunkt des Auslassventils, einlernbar, wobei das Einlernen der Arbeitspunkte während einer Bremsung erfolgt. Unter dem Arbeitspunkten des Einlassventils und des Auslassventils werden diejenigen Zustände verstanden, bei denen der Dichtsitz des Ventils gerade öffnet.

Um vom Ruhezustand des Ventils aus den Arbeitspunkt zu erreichen, werden einem Reglerstrom eines Druckregelmoduls ein Vorsteuerstrom adaptiv hinzugeführt, wobei sich der Vorsteuerstrom aus einem festen Wert und einem eingelernten Wert zusammensetzt. Das Ziel eines derartigen Vorsteuerstromes ist es, den Arbeitspunkt der Ventile möglichst schnell zu erreichen, wodurch sich vorteilhafterweise verkürzte Regelzeiten bei der Druckregelung ergeben.

Das Einlernen der Arbeitspunkte der Ventileinrichtung erfolgt bevorzugt während der ersten fünf bis zehn Bremsvorgängen. Als eingelernter Wert des Vorsteuerstroms wird ein Mittelwert bestimmt, welcher in Verbindung mit dem festen Wert des Vorsteuerstroms sehr nahe am tatsächlichen Arbeitspunkt des jeweiligen Ventils liegt, wobei der ermittelte Vorsteuerstrom für das Einlassventil und das Auslassventil üblicherweise jeweils unterschiedliche eingelernte Werte aufweist.

Aufgrund des Einlernvorgangs der Arbeitspunkte der erfindungsgemäßen Ventileinrichtung ist vorteilhafterweise eine schnelle und optimale Einregelung einer gewünschten Führungsgröße, z.B. eines Bremswunschs des Fahrers, möglich. Da die Einlernfunktion während der Bremsung erfolgt, entfällt vorteilhafterweise ein kostenintensiver Einlernprozessschritt bei der Produktion der erfindungsgemäßen Ventileinrichtung.

Die erfindungsgemäße Ventileinrichtung benötigt aufgrund des elektromechanischen Linearantriebs lediglich elektrische Energie zum Regeln eines Arbeitsdruckes und kann daher vorteilhafterweise als sehr kompakte Anordnung kostenreduziert und bauraumreduziert ausgeführt werden.

Bei der erfindungsgemäßen Ventileinrichtung können mindestens zwei, drei oder mehr der vorstehend beschriebenen Weiterbildungen miteinander kombiniert werden, um im Rahmen der Erfindung sinnvolle Merkmalskombinationen zu erhalten.

Ferner wird o.g. Aufgabe durch ein Druckregelmodul für eine Druckluftanlage gelöst, wobei das Druckregelmodul wenigstens eine vorstehend beschriebene Ventileinrichtung aufweist. Beispielsweise bilden derartige Druckregelmodule, z.B. im Achsmodulator, eine Schnittstelle zwischen dem elektronischen Bremssystem und den pneumatisch betriebenen Bremszylindern. Dazu weist das Druckregelmodul neben der erfindungsgemäßen Ventileinrichtung auch die entsprechende Elektronik mit zugehörigen Regelalgorithmen auf, um den als elektronisches Signal übertragenen Bremswunsch des Fahrers in einen pneumatischen Druck zur Ansteuerung der Bremszylinder umzuwandeln. Die Umwandlung erfolgt dabei mittels der erfindungsgemäßen Ventileinrichtung, wodurch sich aufgrund des elektromechanischen Linearantriebs vorteilhafterweise eine Kosten- und Bauraumreduzierung bei der Herstellung derartiger Druckregelmodule ergibt, da auf eine herkömmliche Vorsteuereinheit mit mehreren Magnetventilen und mindestens einer pneumatischen Steuerleitung verzichtet werden kann.

Die Erfindung löst die oben genannte, ihr zugrunde liegende Aufgabe ferner mit einem Kraftfahrzeug, insbesondere Nutzfahrzeug, welches wenigstens eine erfindungsgemäße Ventileinrichtung und/oder wenigstens ein erfindungsgemäßes Druckregelmodul aufweist.

Schließlich betrifft die Erfindung die Verwendung einer Ventileinrichtung, z.B. als Hauptventil, für eine Druckluftanlage in einem Kraftfahrzeug, insbesondere eine Druckluftbremsanlage in einem Lastkraftwagen. Dabei ist die Ventileinrichtung erfindungsgemäß ausgebildet und kann in einem erfindungsgemäßen Druckregelmodul eingesetzt werden.

Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Schnittdarstellung einer erfindungsgemäßen Ventileinrichtung und
- Fig. 2: eine stark vereinfachte Darstellung möglicher Weiterbildungen der erfindungsgemäßen Ventileinrichtung.

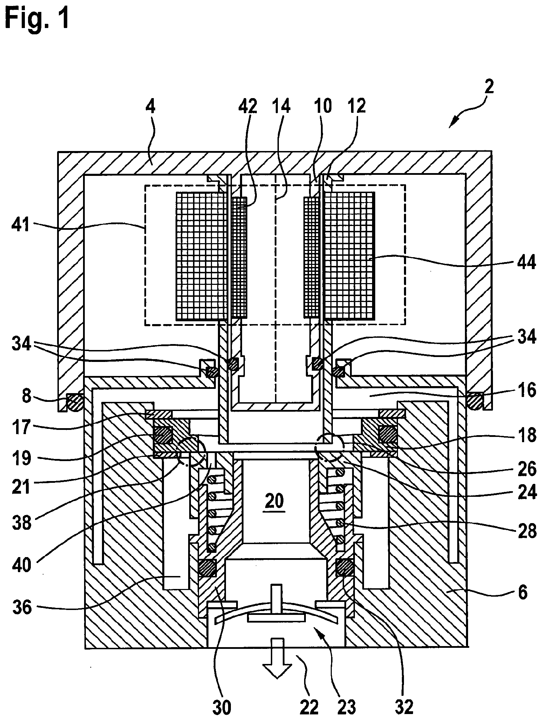

Fig. 1 zeigt eine schematische Schnittdarstellung durch eine erfindungsgemäße Ventileinrichtung 2, welche gemäß einem anliegenden elektrischen Steuersignal entsprechend einer Dreipunkt-Funktion Druckluft aussteuert und bereitstellt.

Die Ventileinrichtung 2 weist ein Gehäuse auf, welches aus einem ersten Gehäuseteil 4 und einem zweiten Gehäuseteil 6 zusammengesetzt ist, wobei die Gehäuseteile 4, 6 durch ein Dichtelement 8 gegeneinander abgedichtet sind.

In dem ersten Gehäuseteil 4 verläuft eine Ventilkolbenführung 10 an der ein Ventilkolben 12 entlang einer Ventilkolbenachse 14 verschiebbar angeordnet ist.

In Fig. 1 ist die erfindungsgemäße Ventileinrichtung 2 in einer Entlüftungsposition dargestellt, bei der Druckluft von einer Arbeitskammer 16 an einem durch einen Sicherungsring 17 axial fixierten Einsatz 18 vorbei in eine Entlüftungskammer 20 geführt wird. Der Einsatz 18 ist dabei mittels eines Dichtrings 19 pneumatisch zum Gehäuse hin abgedichtet. Auf der dem Sicherungsring 17 abgewandten Seite liegt der Einsatz 18 auf einem Stützring 21 auf, wobei der Stützring 21 auf einem Vorsprung einer Gehäusewand des zweiten Gehäuseteils 6 aufliegt.

Da die Entlüftungskammer 20 über einen Ausgang 22 mit der Atmosphäre verbunden ist, kann die Druckluft durch die Entlüftungskammer 20 entweichen. Ein an einem hier nicht dargestellten Druckmittelausgang angeschlossener Verbraucher, z.B. ein Bremszylinder, wird bei dieser Entlüftungsposition des Ventilkolbens 12 entlüftet.

Um zu verhindern, dass Wasser oder andere Fremdkörper über den Ausgang 22 in das Ventil gelangen, sind vor dem Ausgang 22 Dichtungsmittel 23 vorgesehen, welche in Fig. 1 lediglich stark vereinfacht angedeutet sind.

Wird der Ventilkolben 12 derart bewegt, dass dieser eine Neutralposition einnimmt, wird ein Spalt zwischen dem Ventilkolben 12 und einem Belüftungskolben 24 verschlossen, so dass ein Auslassventil 26 die Arbeitskammer 16 von der Entlüftungskammer 20 pneumatisch absperrt.

Zur Erzeugung einer besseren Dichtigkeit ist der Belüftungskolben 24 bevorzugt mit einem Gummi umspritzt.

Ferner wird der Belüftungskolben 24 von einer Feder 28 in einer Schließposition gehalten, wenn keine Kraft von dem Ventilkolben 12 auf den Belüftungskolben 24 wirkt. Zum Positionieren der Feder 28 und des Belüftungskolbens 24 ist in dem unteren Gehäuseteil 6 ein Trägerelement 30 eingesetzt und mittels eines Dichtrings 32 gegen das Gehäuse abgedichtet.

Wird der Ventilkolben 12 in seine Belüftungsposition bewegt, muss dieser Reibkräfte von dynamischen Dichtungen 34 und eine Federkraft der Feder 28 überwinden. Es entsteht ein Spalt zwischen dem Belüftungskolben 24 und dem Einsatz 18, welcher eine Belüftungskammer 36 pneumatisch mit der Arbeitskammer 16 verbindet und somit ein Einlassventil 38 öffnet. Zum Belüften wird die Belüftungskammer 36 über einen hier nicht weiter dargestellten Druckmitteleingang von einer Druckmittelquelle mit Druckmittel, insbesondere Druckluft, versorgt.

Eine Öffnung 40 verbindet den Raum, in dem die Feder 28 angeordnet ist, mit der Arbeitskammer 16, um einen Druckausgleich in dem die Feder 28 aufweisenden Raum zu ermöglichen.

Innerhalb des ersten Gehäuseteils 4 befindet sich ein elektromechanischer Linearantrieb 41, welcher derart ausgestaltet ist, um den Ventilkolben 12 in einer geraden Linie entlang der Ventilkolbenachse 14 zu bewegen. Dadurch kann der am Druckmittelausgang gewünschte Arbeitsdruck eingestellt werden, indem das an der Ventileinrichtung 2 anliegende elektrische Signal, welches z.B. den Bremswunsch des Fahrers repräsentiert, durch den Linearantrieb 41 in eine Wegänderung des Ventilkolbens 12 umgewandelt wird.

Die Regelung des Arbeitsdruckes erfolgt dabei entweder durch ein am Ventilkolben 12 angebrachtes Lage-Messsystem oder durch einen am Druckmittelausgang angeordneten Drucksensor, als Rückkopplung zur Überwachung der Steuerung.

Bevorzugt ist dem elektromechanischen Linearantrieb 41 eine hier nicht dargestellte Steuer- und Regeleinheit vorgeschaltet, welche das an dem Linearantrieb 41 anliegende elektrische Steuersignal bereitstellt.

Da es sich erfindungsgemäß um einen elektromechanischen Linearantrieb 41 handelt, kann vorteilhafterweise auf zusätzliche pneumatische Leitungen verzichtet werden, wodurch die erfindungsgemäße Ventileinrichtung 2 besonders bauraumreduziert herstellbar ist.

Bevorzugt weist die in Fig. 1 dargestellte Ventileinrichtung 2 einen Linearmotor als Linearantrieb 41 auf. Dies hat den Vorteil, dass keine mechanischen Übersetzungsglieder, wie z.B. Zahnstangen oder Schraubengewinde, notwendig sind, um eine lineare Bewegung auszuführen. Ein derartiger Direktantrieb ermöglicht eine hochgenaue Positionierung und Kraftübertragung sowie eine hohe Dynamik und ist daher für Anti-Blockier-Systeme (ABS) und Antriebs-Schlupf-Regelung (ASR) einsetzbar. Mittels der erfindungsgemäßen Ventileinrichtung 2 ist zudem vorteilhafterweise der Arbeitsdruck, z.B. zum Ansteuern der Bremszylinder, feinstufig auflösend regelbar.

Der Linearmotor weist einen Primärteil 42 auf mit mehreren ringförmig voneinander beabstandeten Primärspulen. Ferner weist der Linearmotor einen Sekundärteil 44 auf mit mehreren im Wechsel angeordneten Permanentmagneten, welcher mit dem Ventilkolben 12 fest verbunden ist.

Aufgrund der Überlagerung der magnetischen Flüsse der bestromten Spulen und der Permanentmagnete wird ein Wanderfeld erzeugt, welches den Ventilkolben 12 in Richtung der Ventilkolbenachse 14 in Abhängigkeit des anliegenden Stromes bewegt.

Der Primärteil 42 weist bevorzugt eine Dreiphasenwicklung in Form von aufeinandergeschichteten Solenoidspulen auf. Der Sekundärteil 44 kann statt der Permanentmagnete auch mit entsprechenden Erregerwicklungen ausgeführt werden.

Es ist jedoch ebenso möglich, den Primär- und Sekundärteil des Linearmotors umgekehrt anzuordnen, so dass der Primärteil außen liegt und den Sekundärteil umgibt. Ob bei der erfindungsgemäßen Ventileinrichtung 2 der Primärteil oder der Sekundärteil ortsfest ist, ist abhängig von den jeweiligen Anforderungen der Ventileinrichtung 2. Ein ortsfester Primärteil hat z.B. den Vorteil, dass die Stromversorgung der Drehstromspulen relativ einfach umgesetzt werden kann.

Die extrem hohe Bewegungs- und Positionsgenauigkeit lässt sich durch eine Lageerfassung und entsprechende Regelung erzeugen.

Die Erfindung ist jedoch nicht auf die Verwendung eines Linearmotors als elektromechanischer Linearantrieb 41 beschränkt. Vielmehr sind jedwede elektromechanische Linearantriebe 41 einsetzbar, welche über einen elektromechanischen Antrieb mit einem elektrischen Stellorgan zum Antreiben des Ventilkolbens 12 verfügen, wobei das Stellorgan mechanisch auf den Ventilkolben 12 wirkt.

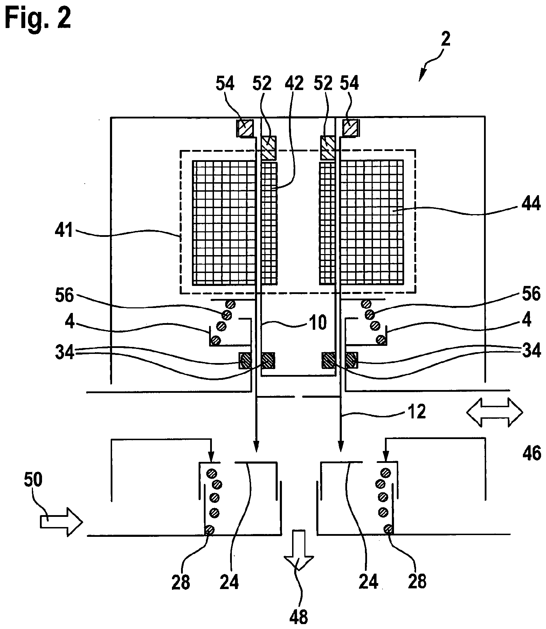

Fig. 2 zeigt eine stark vereinfachte Darstellung möglicher Weiterbildungen der erfindungsgemäßen Ventileinrichtung 2 gemäß Fig. 1. Dabei sind gleiche Teile mit gleichen Bezugsziffern versehen.

Die Ventileinrichtung 2 ist auch hier in der Entlüftungsposition dargestellt, bei der ein an einem Druckmittelausgang 46 anliegender Arbeitsdruck eines Verbrauchers über eine Entlüftung 48 zur Atmosphäre hin entweichen kann.

Wird der Ventilkolben 12 mittels des elektromechanischen Linearantriebs 41 bewegt, kann der Ventilkolben 12 den separat dazu angeordneten Belüftungskolben 24 bewegen, um einen an einem Druckmitteleingang 50 anliegenden Vorratsdruck in die Ventileinrichtung einströmen zu lassen. Die Ventileinrichtung 2 wird somit belüftet.

In Fig. 2 ist als elektromechanischer Linearantrieb 41 ebenfalls ein Linearmotor dargestellt mit einem Primärteil 42, welcher ortsfest mit der Ventilkolbenführung 10 verbunden ist und einem Sekundärteil, welcher mit dem Ventilkolben fest verbunden ist, um diesen anzutreiben bzw. zu bewegen.

Bevorzugt sind in dem Primärteil 42 stromdurchflossene Spulen mit einer Dreiphasenwicklung angeordnet. In dem Sekundärteil 44 sind Permanentmagnete mit abwechselnder Magnetisierung oder entsprechende Erregerwicklungen angeordnet. Die durch die Überlagerung der magnetischen Flüsse aus Primärteil 42 und Sekundärteil 44 erzeugte elektromagnetische Kraft wirkt als Schubkraft auf den Ventilkolben 12 als bewegliche Einheit.

Für eine bessere mechanische Führung und zur Reduzierung von Reibkräften bei der Bewegung des Ventilkolbens 12 ist bevorzugt zwischen dem Ventilkolben 12 und der Ventilkolbenführung 10 mindestens ein stabiles Gleitelement 52 bzw. Gleitlager angeordnet.

Ferner ist für eine geräuscharme Ausgestaltung der erfindungsgemäßen Ventileinrichtung wenigstens ein elastisches Anschlagelement 54 vorgesehen. Das Anschlagelement 54 ist bevorzugt oberhalb des Ventilkolbens 12 am Gehäuse 4 befestigt und ist vorteilhafterweise in der Lage einen großen Teil der Bewegungsenergie des Ventilkolbens 12 aufzunehmen.

Zum Erzeugen eines sicheren "Fail Safe"-Zustands, d.h. eines ausfallsicheren Zustands, weist die Ventileinrichtung 2 eine Rückholfeder 56 auf. Die Rückholfeder 56 ermöglicht vorteilhafterweise die selbständige Bewegung des Ventilkolbens 12 in die Entlüftungsposition, wenn das elektrische Steuersignal die Einnahme der Entlüftungsposition vorgibt oder wenn kein elektrisches Signal anliegt. In dieser Entlüftungsposition wird ein an dem Druckmittelausgang 46 angeschlossener Verbraucher, wie z.B. Bremszylinder, vollständig entlüftet.

Die Rückholfeder 56 ist umlaufend um den Ventilkolben 12 angeordnet und ortsfest mit dem Gehäuse 4 verbunden sowie mit dem Ventilkolben 12 selbst.

## Patentansprüche

1. Ventileinrichtung für eine Druckluftanlage, welche einen mit einer Druckmittelquelle verbindbaren Druckmitteleingang (50), wenigstens einen mit einem Verbraucher verbindbaren Druckmittelausgang (46) und wenigstens eine zur Atmosphäre führende Entlüftung (48) aufweist, wobei die Ventileinrichtung (2) einen in einem Gehäuse (4) beweglich angeordneten Ventilkolben (12) aufweist, welcher zum Öffnen und Schließen eines Einlassventils (38) einen zum Ventilkolben (12) separat angeordneten Belüftungskolben (24) bewegt,
wobei die Ventileinrichtung (2) einen elektromechanischen Linearantrieb (41) aufweist, welcher den Ventilkolben (12) zum Steuern von am Druckmittelausgang (46) herrschenden Drücken, z.B. Bremsdrücken in einem Bremssystem, in Abhängigkeit eines dem Linearantrieb (41) zugeführten elektrischen Steuersignals linear antreibt,
**dadurch gekennzeichnet, dass**
die Ventileinrichtung (2) druckausgeglichen aufgebaut ist, wozu Durchgangsöffnungen in dem Ventilkolben und dem Belüftungskolben vorgesehen sind.

2. Ventileinrichtung nach Anspruch 1,
**dadurch gekennzeichnet, dass**
der elektromechanische Linearantrieb (41) als ein Linearmagnetsystem ausgebildet ist.

3. Ventileinrichtung nach Anspruch 1,
**dadurch gekennzeichnet, dass**
der elektromechanische Linearantrieb (41) als ein Linearsteller ausgebildet ist.

4. Ventileinrichtung nach Anspruch 1,
**dadurch gekennzeichnet, dass**
der elektromechanische Linearantrieb (41) als ein Linearmotor ausgebildet ist.

5. Ventileinrichtung nach einem der vorhergehenden Ansprüche,
**dadurch gekennzeichnet, dass**
die Ventileinrichtung (2) eine pneumatische Nennweite von mindestens 8 mm aufweist.

6. Ventileinrichtung nach einem der vorhergehenden Ansprüche, **gekennzeichnet durch**
mindestens einen mechanischen Energiespeicher (56), z.B. eine Rückholfeder, welche derart ausgebildet ist, um den Ventilkolben (12) in eine definierte Position zu bewegen in der die Ventileinrichtung (2) entlüftet ist.

7. Ventileinrichtung nach einem der vorhergehenden Ansprüche, **gekennzeichnet durch**
ein oder mehrere Gleitelemente (52), welche zwischen einer Ventilkolbenführung (10) und dem Ventilkolben (12) angeordnet sind.

8. Ventileinrichtung nach einem der vorhergehenden Ansprüche, **gekennzeichnet, durch**
mindestens ein Anschlagelement (54), welches derart ausgestaltet ist, um den Aufprall des Ventilkolbens (12) zu dämpfen.

9. Ventileinrichtung nach einem der vorhergehenden Ansprüche, **gekennzeichnet durch**
mindestens zwei dynamische Dichtungen (34), welche derart ausgestaltet sind, um den Ventilkolben (12) gegen das Gehäuse (4) abzudichten.

10. Ventileinrichtung nach einem der vorhergehenden Ansprüche,
**dadurch gekennzeichnet, dass**
das elektrische Steuersignal mit einem Dithersignal überlagert ist.

11. Ventileinrichtung nach einem der vorhergehenden Ansprüche,
**dadurch gekennzeichnet, dass**
Arbeitspunkte der Ventileinrichtung (2) einlernbar sind, wobei die Einlernfunktion während des Betriebs der Ventileinrichtung (2), z.B. während der Bremsung, erfolgt.

12. Druckregelmodul für eine Druckluftanlage eines Kraftfahrzeugs, **gekennzeichnet durch**
mindestens eine Ventileinrichtung (2) nach einem der Ansprüche 1 bis 11.

13. Kraftfahrzeug, z.B. Nutzfahrzeug,
**gekennzeichnet durch**
wenigstens eine Ventileinrichtung (2) nach einem der Ansprüche 1 bis 11 und/oder wenigstens ein Druckregelmodul nach Anspruch 12.

14. Verwendung einer Ventileinrichtung (2) für eine Druckluftanlage eines Kraftfahrzeugs, z.B. einer Druckbremsanlage in einem Lastkraftwagen, **dadurch gekennzeichnet, dass**
die Ventileinrichtung (2) nach einem der Ansprüche 1 bis 11 ausgebildet ist oder die Ventileinrichtung (2) als Hauptventil in einem Druckregelmodul gemäß Anspruch 12 und/oder in einem Kraftfahrzeug gemäß Anspruch 13 eingesetzt wird.

## Claims

1. Valve device for a compressed air system which has a pressure medium inlet (50) which can be connected to a pressure medium source, at least one pressure medium outlet (46) which can be connected to a consumer, and at least one ventilation means (48) which leads to atmosphere, the valve device (2) having a valve piston (12) which is arranged movably in a housing (4) and, for opening and closing an inlet valve (38), has an aeration piston (24) which is arranged separately with respect to the valve piston (12), the valve device (2) having an electromechanical linear drive (41) which drives the valve piston (12) in a linear manner in order to control pressures which prevail at the pressure medium outlet (46), for example brake pressures in a brake system, in a manner which is dependent on an electric control signal which is fed to the linear drive (41), **characterized in that** the valve device (2) is of pressure-equalized construction, to which end passage openings are provided in the valve piston and the aeration piston.

2. Valve device according to Claim 1, **characterized in that** the electromechanical linear drive (41) is configured as a linear magnet system.

3. Valve device according to Claim 1, **characterized in that** the electromechanical linear drive (41) is configured as a linear actuator.

4. Valve device according to Claim 1, **characterized in that** the electromechanical linear drive (41) is configured as a linear motor.

5. Valve device according to one of the preceding claims, **characterized in that** the valve device (2) has a pneumatic nominal width of at least 8 mm.

6. Valve device according to one of the preceding claims, **characterized by** at least one mechanical energy store (56), for example a return spring, which is configured so as to move the valve piston (12) into a defined position, in which the valve device (2) is ventilated.

7. Valve device according to one of the preceding claims, **characterized by** one or more sliding elements (52) which are arranged between a valve piston guide (10) and the valve piston (12).

8. Valve device according to one of the preceding claims, **characterized by** at least one stop element (54) which is configured so as to damp the impact of the valve piston (12).

9. Valve device according to one of the preceding claims, **characterized by** at least two dynamic seals (34) which are configured so as to seal the valve piston (12) with respect to the housing (4).

10. Valve device according to one of the preceding claims, **characterized in that** the electric control signal is superimposed with a dither signal.

11. Valve device according to one of the preceding claims, **characterized in that** operating points of the valve device (2) can be memorized, the memorizing function taking place during the operation of the valve device (2), for example during the braking operation.

12. Pressure regulating module for a compressed air system of a motor vehicle, **characterized by** at least one valve device (2) according to one of Claims 1 to 11.

13. Motor vehicle, for example commercial vehicle, **characterized by** at least one valve device (2) according to one of Claims 1 to 11 and/or at least one pressure regulating module according to Claim 12.

14. Use of a valve device (2) for a compressed air system of a motor vehicle, for example an air brake system in a lorry, **characterized in that** the valve device (2) is configured according to one of Claims 1 to 11, or the valve device (2) is used as a main valve in a pressure regulating module according to Claim 12 and/or in a motor vehicle according to Claim 13.

## Revendications

1. Dispositif de soupape pour une installation d'air comprimé, qui présente une entrée de fluide sous pression (50) pouvant être connectée à une source de fluide sous pression, au moins une sortie de fluide sous pression (46) pouvant être connectée à un consommateur, et au moins un désaérage (48) conduisant vers l'atmosphère, le dispositif de soupape (2) présentant un piston de soupape (12) disposé de manière déplaçable dans un boîtier (4), lequel, pour l'ouverture et la fermeture d'une soupape d'admission (38), déplace un piston de ventilation (24) disposé de manière séparée du piston de soupape (12),
le dispositif de soupape (2) présentant un entraînement linéaire électromécanique (41) qui entraîne de manière linéaire le piston de soupape (12) pour la commande de pressions régnant au niveau de la sortie de fluide sous pression (46), par exemple de pressions de freinage dans un système de freinage, en fonction d'un signal de commande électrique acheminé à l'entraînement linéaire (41),
**caractérisé en ce que**
le dispositif de soupape (2) est construit avec un équilibrage de pression, des ouvertures de passage étant prévues à cet effet dans le piston de soupape et le piston de ventilation.

2. Dispositif de soupape selon la revendication 1, **caractérisé en ce que**
l'entraînement linéaire électromécanique (41) est réalisé sous forme de système magnétique linéaire.

3. Dispositif de soupape selon la revendication 1, **caractérisé en ce que**
l'entraînement linéaire électromécanique (41) est réalisé sous forme d'actionneur linéaire.

4. Dispositif de soupape selon la revendication 1, **caractérisé en ce que**
l'entraînement linéaire électromécanique (41) est réalisé sous forme de moteur linéaire.

5. Dispositif de soupape selon l'une quelconque des revendications précédentes,
**caractérisé en ce que**
le dispositif de soupape (2) présente une dimension nominale pneumatique d'au moins 8 mm.

6. Dispositif de soupape selon l'une quelconque des revendications précédentes,
**caractérisé par**
au moins un accumulateur d'énergie mécanique (56), par exemple un ressort de rappel, qui est réalisé de manière à déplacer le piston de soupape (12) dans une position définie dans laquelle le dispositif de soupape (2) est désaéré.

7. Dispositif de soupape selon l'une quelconque des revendications précédentes,
**caractérisé par**
un ou plusieurs éléments de glissement (52) qui sont disposés entre un guide de piston de soupape (10) et le piston de soupape (12).

8. Dispositif de soupape selon l'une quelconque des revendications précédentes,
**caractérisé par**
au moins un élément de butée (54) qui est configuré de manière à amortir l'impact du piston de soupape (12).

9. Dispositif de soupape selon l'une quelconque des revendications précédentes,
**caractérisé par**
au moins deux garnitures d'étanchéité dynamiques (34) qui sont configurées de manière à étanchéifier le piston de soupape (12) par rapport au boîtier (4).

10. Dispositif de soupape selon l'une quelconque des revendications précédentes,
**caractérisé en ce que**
le signal de commande électrique est superposé à un signal dither.

11. Dispositif de soupape selon l'une quelconque des revendications précédentes,
**caractérisé en ce que**
des points de travail du dispositif de soupape (2) peuvent être appris, la fonction d'apprentissage ayant lieu pendant le fonctionnement du dispositif de soupape (2), par exemple pendant le freinage.

12. Module de régulation de pression pour une installation d'air comprimé d'un véhicule automobile,
**caractérisé par**
au moins un dispositif de soupape (2) selon l'une quelconque des revendications 1 à 11.

13. Véhicule automobile, par exemple véhicule utilitaire,
**caractérisé par**
au moins un dispositif de soupape (2) selon l'une quelconque des revendications 1 à 11, et/ou au moins un module de régulation de pression selon la revendication 12.

14. Utilisation d'un dispositif de soupape (2) pour une installation d'air comprimé d'un véhicule automobile, par exemple d'une installation de freinage sous pression dans un poids lourd, **caractérisée en ce que**
le dispositif de soupape (2) est réalisé selon l'une quelconque des revendications 1 à 11 ou le dispositif de soupape (2) est utilisé en tant que soupape principale dans un module de régulation de pression selon la revendication 12 et/ou dans un véhicule automobile selon la revendication 13.
